# EUROPEAN PATENT APPLICATION

(11) **EP 4 597 327 A1**
(43) Date of publication of application: **06.08.2025**
(21) Application number: 24382087.5
(22) Date of filing: 30.01.2024
(51) Int. Cl.: G06F 12/02

(54) **SSD / FLASH MEMORY WEAR - LEVELLING**

(71) Applicant: Giesecke+Devrient Mobile Security Germany GmbH, 81677 München (DE)
(72) Inventor: Gomez Jimenez, Ruben, 81677 München (DE); Pujazon, Daniel, 81677 München (DE); Patiño, David, 81677 München (DE)
(74) Representative: LKGLOBAL Lorenz & Kopf Patentanwalt Attorney at Law PartG mbB

(57) **Abstract**

A method for wear levelling an SSD/Flash memory 10 comprising memory cells 1 being configured to have a data block 2 stored therein is suggested. Memory cells 1 are emptied by moving the data blocks 2 currently stored therein M5, whereas the data blocks 2 are selected M3 to be moved based on the nature of the data block 2, preferably, if a predetermined criterion is met (M2). Preferably, the data block 2 is selected if it relates to executable code or program code or relates to a JavaCard Executable Load File, ELF. Further, a memory unit 100 and an electronic device 200 each comprising an SSD/Flash memory 10 are suggested, wherein the weal-levelling method according to the present invention is executed by a controller 20 of the SSD memory unit 100 or an operating system 30 of the device 200, respectively.

## Description

The present invention relates to a method for wear levelling an SSD/Flash memory comprising memory cells as well as a memory unit and an electronic device, each having an SSF/ Flash memory and being configured to execute the weal-levelling method.

### BACKGROUND OF THE INVENTION

Nowadays Solid-State Drive (SSD) and Flash memories are increasingly used as non-volatile memory modules in all kinds of electronic devices. A known problem of such types of memories is, however, that the length of their lifecycles depends on the frequency of write operations into the memory. Caused by electrical effects, memory cells wear off over time substantially proportional to the number of write operations. Because of such technology-dependent wear-off processes, the number of write operations into SSD/ Flash memory cells is limited and beyond such limits, memory cells may forget data blocks residing therein or write and erase operations may become unreliable if not impossible at all.

Conventionally, this problem is addressed by wear-levelling algorithms that aim at distributing write operations as evenly as possible across substantially all memory cells of a memory, thus preventing individual memory cells from reaching the end of their lifecycle significantly earlier than other cells, thereby prolonging the lifecycle of the memory unit as a whole.

According to a dynamic wear-levelling approach, an existent data block that is to be updated is not re-written into the same memory cell where it actually resides, but into an empty memory cell while the current memory cell is erased. This reduces the wear-off of memory cells whose residing data blocks are often re-written.

Alternatively, according to a static wear-levelling approach, write operations are not exclusively applied to empty cells but more generally to memory cells that are comparably little worn off. While this approach helps distributing write operations more evenly across the whole memory as compared to the dynamic approach, it also results in a steep increase of write operations and respective computational overhead.

Before that background, US 6,732,221 B1 suggests determining the frequency at which wear-levelling is applied based on a random process. Once it is so determined that a wear-levelling step takes place, a data block is randomly selected and moved into an empty memory cell, thereby preparing the original memory cell to have another data block stored therein. Since this randomized process is independent of how worn off a particular memory cell actually is, write operations are evenly distributed across all memory cells of the memory, thus prolonging its lifecycle. Due to only a fraction of all write operations being affected by wear-levelling, computational overhead is reduced as compared to the above-referenced approaches, while at the same time that fraction of wear-levelled write operations still ensures that memory cells are equally worn off and the lifecycle of the memory unit as a whole is prolonged.

This randomized approach, however, fails to take into account wear-off levels of individual memory cells to the effect that as far as data blocks of heavily worn-off memory cells are randomly moved, the overall lifecycle of the memory as a whole may even be reduced instead of prolonged.

It is therefore desirable to provide a solution to the above-outlined technical problems and to provide a method by which the lifecycle of a memory unit as a whole is effectively prolonged without imposing undue computational overhead.

### SUMMARY OF THE INVENTION

The present invention addresses the above object by the subject-matter covered by the independent claims. Preferred embodiments of the invention are defined in the dependent claims.

According to a first aspect of the present invention, a method for wear-levelling an SSD or Flash memory with memory cells is provided, where each memory cell of the SSD/Flash memory is configured to have a data block stored or written therein. According to the invention, memory cells are emptied in that the data block currently stored therein is selected to be moved based on that data block's nature. The effect of such a data move operation, also referred to as dummy write operation, is that a new data block is subsequently written into a memory cell that has been emptied based on the nature of the data block previously stored therein. Therefore, as the nature of the selected data block suggests that the data block is only rarely re-written, moving that data block wear-levels the overall wear-off of the memory. In effect, the procedure suggested herein potentially affects all memory cells, albeit dependent on a data block's individual nature, so that the number of data blocks involved in wear-levelling is increased to all available memory cells, thus rendering wear-levelling more effective and prolonging the memories life cycle.

Consequently, a write operation during the regular operation of the memory unit is applied to a - presumably less worn off - memory cell that has been emptied based on the nature of its then-residing data block. In this regard, within the context of the present invention the expression that a data block is written into a memory cell covers both writing a new data block and updating or re-writing an already existent data block.

Likewise, a re-write operation during the regular operation of the memory, i.e. an operation directed to re-writing or updating an existent data block, is not applied to the - due to regular re-writes presumably heavier worn-off - memory cell where that data block currently resides in, but to a - presumably less worn-off - memory cell whose previous data block has been moved based on the nature of that data block. Consistently, within the context of the present invention the expression that a data block is re-written means that an existent data block already residing in a memory cell is to be written in an updated form, that is updated.

Before that background, the effect of the wear-leveling method according to the present invention on the lifecycle of a memory with N cells among which M cells carry static data blocks and N-M cells carry non-static or dynamic data blocks can be quantified as follows: While conventional wear-levelling involves or covers only the N-M cells carrying dynamic data blocks, the wear-levelling suggested by the present invention involves or covers all N memory cells.

While the wear-level dependent lifecycle of a memory can be estimated to be proportional to the number of memory cells involved in wear-levelling, the lifecycle of a memory with M = 20% static cells would be prolonged to up to 125 % (= N/(N-M) ) by the method according to the present invention, as compared to conventional wear levelling.

Within the scope of the present invention, the notion of the nature of a data block relates to the characteristics or type of the data contained in that block. If, for instance, the nature of a data block is such that it - or more precisely the data that data block consists of - is rarely updated or re-written, the related memory cell is considered to be only little worn off. Thus, according to the invention, the memory cell in which that data block resides has a high probability to be emptied and subsequently written based on the nature of the data block residing therein.

If, on the other hand, the nature of a data block is such that the data is frequently updated, the related memory cell is considered to be heavier worn off. Thus, according to the invention, the memory cell in which that data block resides has a low probability to be emptied and subsequently be written based on the nature of the data block residing therein.

The present invention provides the advantage, that the wear-levelling of the overall memory is improved over known approaches, because memory cells are emptied and by that prepared for subsequent write operations if their data blocks are among the most static data blocks throughout the memory. Memory cells emptied by a dummy write in that their data blocks are moved according to the present invention are, based on the nature of these data blocks, worn off below average, thus increasing the lifecycle of the memory unit as a whole.

Emptying memory cells in which the most static data blocks reside, of course, increases the probability to use little worn off memory cells for writing new data blocks and re-writing existent data blocks into during the regular operation of the memory. Within the scope of the present invention, a static data block is one that is rarely re-written and that, in consequence, resides in a little worn off memory cell.

In some embodiments the method according to the present invention is activated only if a predetermined criterion is met. Preferably, the selection of data blocks based on the nature of the data block stored therein is activated if the memory unit surpasses a predetermined threshold of write operations. That way, the wear-levelling does not commence before the memory unit experienced a considerable number of write operations. Alternatively, the predetermined criterion may also relate to a random decision as to whether or not a data block is moved or a dummy write takes place.

In this regard, the predetermined criterion may also relate to an incoming write or re-write operation. The data block movement according to the present invention may take place if an empty memory cell is required to write a new data block into or re-write an already existent data block.

The effect of the predetermined criterion is particularly, that the number of dummy write operations and related computational overhead is reduced, thus rendering the method more effective without reducing the effects of wear leveling.

According to some embodiments of the invention, a memory cell is emptied if the data block residing therein relates to executable code or program code or to code related to an operating system of a device accessing the memory. This assumption is based on the hypothesis that data blocks that relate to application data are far more often written or re-written, as compared to data blocks relating to program code or to an operating system. A device having access to an SSD/ Flash memory unit according to the present invention and executing program code will access memory cells carrying program code in a read fashion only, thus not causing additional wear-off to such memory cells. On the other hand, memory cells carrying application data used by executed programs, such as output or result data, will be frequently accessed in a write fashion, thus increasing the wear-off of such memory cells.

On a mobile data carrier or smart card operated under a Java Card operating system, for instance, data blocks related to ELF files (Executable Load File) are selected to be moved according to the invention, because ELF files relate to executable Java Card program code.

Preferably, a data block to be moved based on its nature is moved into an empty memory cell; being related to as a dummy write operation. Alternatively, a (primary) data block to be moved based on its nature is moved into a target memory cell that is emptied by, in turn, moving the (secondary) data block residing in that target memory cell to another memory cell being empty or emptied. While according to the invention the primary data block is selected based on its nature, the secondary data block may be selected based on its nature as well. That way, up to a predetermined level a cascade of data block movements based on the block's nature is possible in order to optimize the wear-levelling of the memory unit as a whole.

Preferably, a candidate list of those data blocks is maintained, whose nature suggests that the respective memory cells are only little worn off. The candidate list thus may comprise data blocks relating to static data and/or to executable or program code and/or relating to a JavaCard ELF file and/or to an operating system.

If a data block is to be moved, for instance on a periodical basis or in view of an incoming write or re-write request, a data block is randomly selected from the candidate list, or selected based on another heuristics. The candidate list provides a clear distinction between data blocks residing in little worn-off memory cells and considerably worn-off memory cells, the latter being in danger of limiting the overall lifecycle of the memory unit as a whole, if a data block would be written thereinto.

The above-described measures increase the overall lifecycle of an SSD/Flash memory unit as write operations are effectuated into memory cells that are only little worn off. Further, computational overhead is controllable and thus prevented based on flexible predetermined criteria as to the frequency of application of the data move operations according to the invention.

Overall, potentially all memory cells are involved in the wear-levelling method according to the present invention, thus prolonging the life cycle of the memory because no memory cells are excluded from wear-levelling per se.

According to a second aspect of the invention, an SSD/ Flash memory unit comprising a memory having memory cells is provided, each memory cell being configured to have a data block stored therein. A memory controller of the SSD/ Flash memory unit is configured to empty memory cells by moving data blocks currently stored therein, a data block being selected to be moved based on the nature of the data block.

According to a third aspect of the invention, an electronic device comprising an SSD/Flash memory having memory cell is provided, each memory cell being configured to have a data block stored therein. An operating system of the device is configured to empty memory cells by moving data blocks currently stored therein, a data block being selected to be moved based on the nature of the data block.

Preferably, the memory controller and the operating system are further configured to select a data block to be moved if that data block relates to static data and/or relates to executable code or program code and/or relates to a JavaCard Executable Load File, ELF.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- FIG. 1: shows a flow chart outlining the steps of a preferred method according to the present invention
- FIG. 2a: shows a first example of memory operations conducted in line with the method according to the present invention;
- FIG. 2b: shows a second example of memory operations conducted in line with the method according to the present invention;
- FIG.3a: shows a memory unit comprising a memory controller according to the present invention; and
- FIG.3b: shows an electronic device comprising a memory unit and an operating system according to the present invention.

Detailed explanations of the present invention are given below with reference to attached drawings that illustrate specific embodiment examples of the present invention. These embodiments are described in sufficient detail to enable those skilled in the art to carry out the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention.

In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, alike numerals refer to the same or similar functionality throughout the several views.

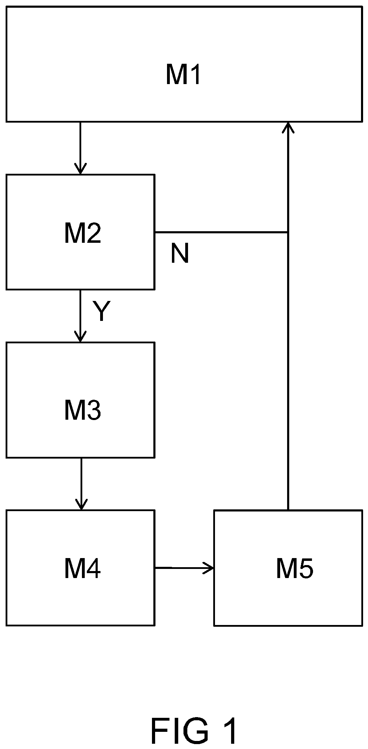

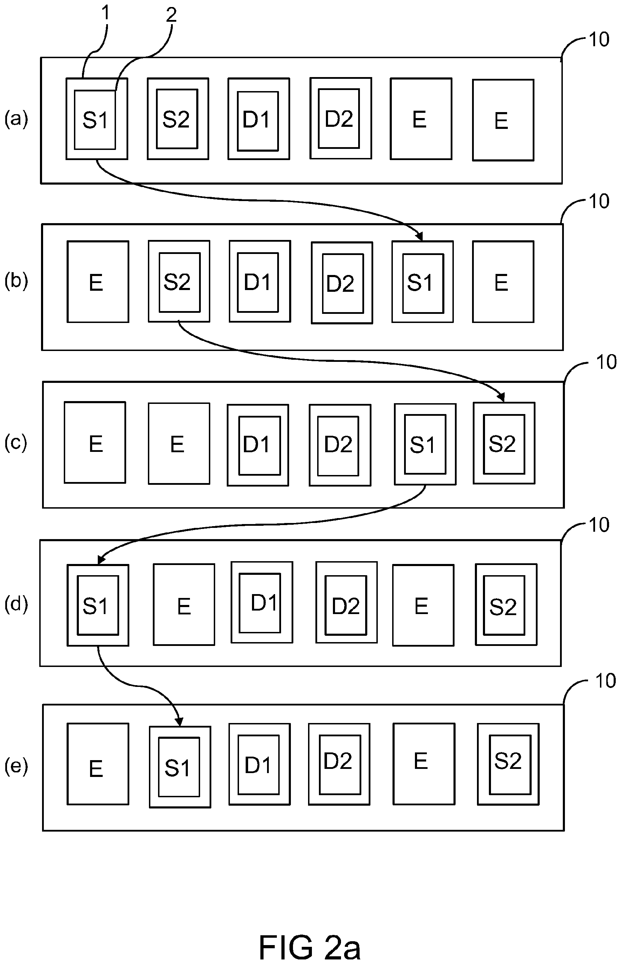

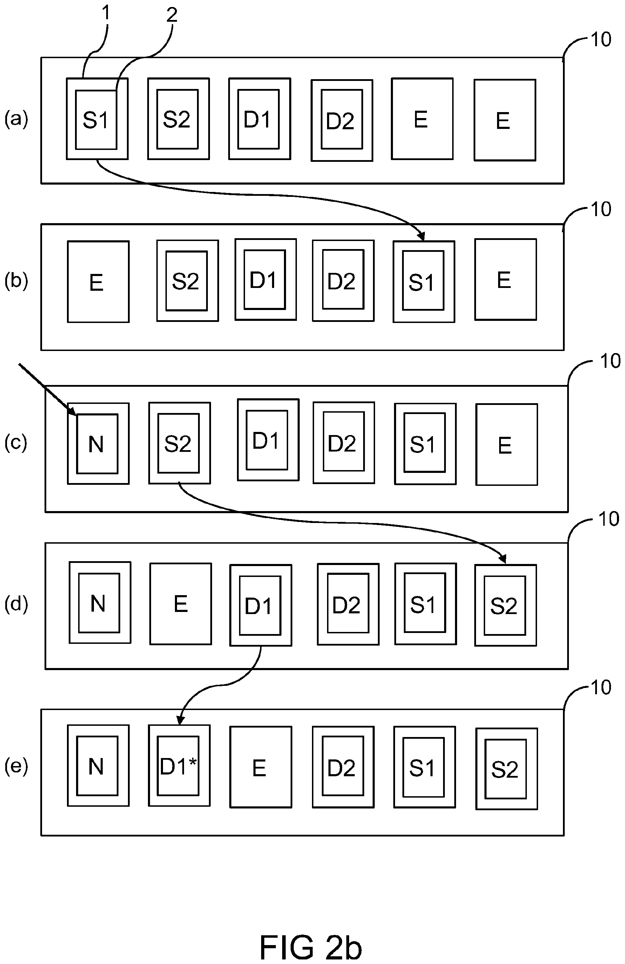

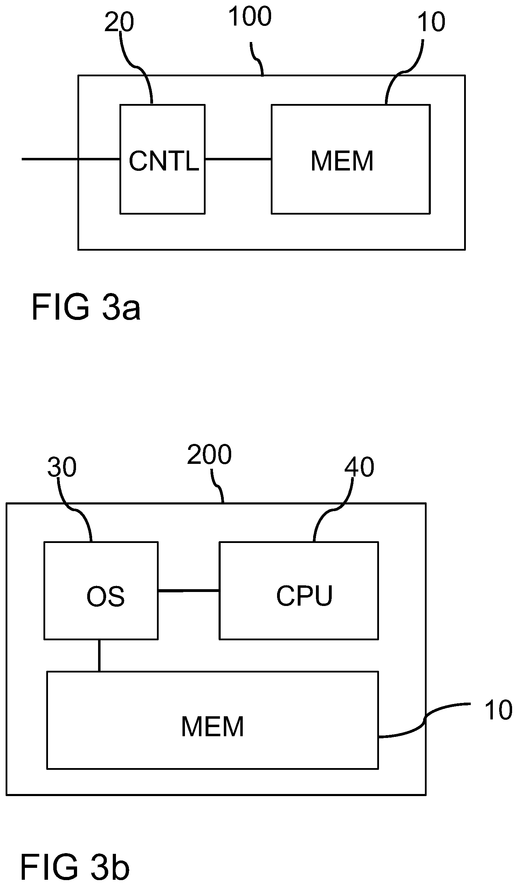

Fig. 1 shows the basic steps of a wear-levelling method according to the present invention. This method optimizes the configuration of memory cells 1 and data blocks 2 in an SSD/Flash memory 10 (MEM) and is, for example, conducted by a memory controller 20 (CNTL) of an SSD/ Flash memory unit 100 as shown in Fig. 3a or by an operating system 110 (OS) of an electronic devise 200 as shown in Fig. 3b. The effects that the method according to the present invention has on the memory configuration within an SSD/Flash memory 10 (MEM) are illustrated in Fig. 2a and Fig. 2b.

The problems addressed by the present invention are technology-immanent wear-off effects of SSD and/or Flash memories during their regular operation that result from electronic effects known in the art. The more often a data block 2 is stored in a memory cell 1, i.e. the more often the memory cell 1 is written, the more it wears off and the earlier that memory cell 1 becomes defective and thus inoperable. Since this effect affects each memory cell 1 within an SSD/Flash memory 10, the length of the lifecycle of a memory 10 itself depends on the wear-off level of its individual memory cells 1. As a general rule of thumb, the more evenly write operations are distributed across the memory cells 1 of an SSD/ Flash memory 10, the longer that memory unit remains operable. Vice versa, the more the wear-off levels of a memory's memory cells 1 deviate from each other, the earlier that memory 10 becomes inoperable because of some heavily worn-off memory cells 1 dominating the overall wear-off.

Within that context, the method illustrated in Fig. 1 optimizes the lifecycle of a memory 10 by involving not only empty memory cells 1 or by only updating memory cells 1 but by involving potentially all memory cells 1 based on the nature of the data blocks residing therein, thus rendering wear-levelling more effective and prolonging the memories life cycle. The introduction of the concept of the nature of a data block into wear-levelling has the effect that little worn off memory cells 1 are preferred over heavily worn off memory cells in connection with incoming write operations.

According to step M1 of Fig. 1, a memory 10 is regularly operated in that new data blocks 2 are written into empty memory cells 1 or existent data blocks 2 are updated in that they are re-written into the memory cell 1 they currently reside in.

Besides empty memory cells 1 (in Fig. 2, marked E) in which data block 2 can be written into, the data blocks 2 stored in the memory 10 are of different nature or type. On a coarse scale, data blocks 2 can be subdivided according to their nature in static data blocks 2 (in Fig. 2, marked S1, S2) and dynamic data blocks 2 (in Fig. 2, marked D1, D2).

Static blocks 2, or rather block of static nature, contain data that is rarely, if any, updated so that the memory cells 1 carrying such static blocks 2 are relatively little worn off. Static blocks 2 may for instance carry executable code, program code or JavaCard ELF (Executable Load File) data or parts of an operating system and therefore are only rarely updated once they are stored in a memory 10. The memory cells 1 in which such static blocks 2 reside, are usually only little worn off.

Dynamic blocks 2, or rather block of dynamic nature, on the other hand, contain data that is comparably often updated so that the memory cells 1 carrying such dynamic blocks 2 are relatively heavily worn off. Dynamic blocks 2 may for instance carry application data, such as results or data output of executed programs, log files or other administrative data that is often updated. The memory cells 1 in which such dynamic blocks 2 reside, are usually heavily worn off.

Besides having these two classes of data block's nature, that is static and dynamic data blocks 2, further classes may be used according to other embodiments, for instance the four classes "very static" (operating system), "static" (program code), "dynamic" (application data), and "very dynamic" (log files).

According to step M2 of Fig. 1, a predetermined condition is checked, and if that condition is met (Y), wear-levelling according to the present invention takes place in steps M2 to M5. If that condition is not met (N), the regular operation of the memory unit 10 continues. The predetermined condition checked in step M2 may be a time threshold, e.g. every 0.01 or 0.1 seconds, or a quantitative threshold related to the number of write operations conducted on the memory unit overall or within a certain time interval. For example, per every 100 regular write operations one inventive wear-levelling operation may take place. Preferably, the predetermined condition may be set up so that an inventive wear-levelling operation is triggered every n-th time a regular write operation is to be conducted, e.g. a new data block 2 is to be written or a dynamic data block 2 is to be updated. The predetermined condition allows for reducing the computational burden of dummy write operations and wear-levelling, while at the same time the prolonging effects of wear-levelling on the life cycle of a memory are maintained.

Now turning to Fig. 2a, rows (a) to (e) show consecutive memory configurations of a memory 10. At a time (a), the configuration comprises six memory cells 1, two carrying static blocks S1, S2, two carrying dynamic blocks D1, D2, and two being empty E.

At a time (b), the predetermined condition is met (see Fig. 1, step M2) and the static block S1 is selected and moved to an empty cell E, because the memory cell 1 where the static block S1 resides is assumed to be only little worn off, as static block S1, relating to program code, has not been updated since it was written into that memory cell 1. The empty cell E, on the other hand, is assumed to be heavily worn off because that memory cell 1 has already experienced many write and erase operations. Moving static block S1 into an empty cell E thus levels the wear of the two memory cells involved.

At a time (c), the predetermined condition is met again and the static block S2 is selected and moved to an empty cell E. At times (d) and (e) the static block S1 is again selected and moved so that the memory cells 1 involved experience a levelled wear-off despite the fact that they periodically carry static data on the one hand and, on the other hand, no data at all.

Now turning to Fig. 2b, rows (a) to (e) show consecutive memory configurations triggered by regular write operations, whereas the configuration at time (a) corresponds to that of Fig. 2a.

At a time (b), the predetermined condition is met (see Fig. 1, step M2) because a new data block N is requested to be written into memory 10. In order to provide a little worn-off memory cell 1 for receiving the new data block N, static block S1 is selected and moved to an empty cell E, thereby emptying the little worn off memory cell 1 where the static block S1 resides. At time (c), the new data block N is written into the little worn off cell 1 that formerly carried static block S1.

At time (d), the predetermined condition is met again because the dynamic block D1 is requested to be updated. In order to prevent the update taking place within the already heavily worn off cell 1 carrying often updated dynamic block D1, static block S2 is selected and moved to an empty cell E at time (d) in order to empty the little worn off memory cell carrying static block S2 for receiving the updated dynamic block D1* at time (e).

Now returning to Fig. 1 and step M3, a static data block 2 is selected because its nature suggests that the memory cell 1 carrying that block 2 is only little worn off. For that reason, a candidate list is maintained that comprises all static blocks that qualify for residing in a little worn off memory cell 1 based on the block's nature. Within the context of Fig. 2a and 2b, the candidate list comprises blocks S1 and S2. The selection step M3 then preferably consists of randomly selecting a static block 2 to be moved from the candidate list. Alternatively, an alternative heuristics can be applied to select a static block 2 of the candidate list. Also, the candidate list can be regularly updated based on an analysis of data blocks 1 written and moved.

Once a static block 2 is selected, a target memory cell 1 is chosen in step M4 to which the selected static block 2 is subsequently moved. While this is preferably done by randomly choosing any empty memory cell, other approaches are possible as well, for example by considering past write operations that took place in empty memory cells 1.

In step M5 of Fig. 1, the selected static data block 2 is finally moved into the chosen target memory cell 1, thereby providing the little worn-off memory cell 1 where the static block 1 resided for receiving a data block 2 upon the next write operation being executed.

In step M5 of Fig. 1, the regular operation of the memory unit 1 is resumed and regular write operations may be carried out until the condition of step M1 is met again and, for example, a new data block 2 or an updated dynamic data block 2 is to be written into a little worn-off memory cell 1 that is emptied in steps M2 to M5, as for instance illustrated in Fig. 2b, at times (c) and (e).

The effect of the described wear-leveling method on a memory as depicted in Fig 2a (a) and Fig. 2b (a) with 33,3% of all cells carrying static data blocks (S1, S2) and 66,6% of all cells carry non-static data (D1, D2, E) is that the life cycle is prolonged up to 150%, as compared to a wear-levelling approach involving only the cells carrying non-static blocks. The reason for this increase is, of course, that according to the invention potentially 100% of memory cells 1 are involved, as compared to only 66,6% of non-static memory cells 1 according to known methods.

Fig. 3a shows an SSD/Flash memory unit 100 in more detail. The memory unit 100 comprises an SSD/ Flash memory 10 (MEM) having memory cells 1 and data blocks 2 stored therein. The controller 20 (CNTL) of the memory unit 100 contains software-implemented and/ or hard-wired instructions that implement the method of Fig. 1 in order to increase the lifecycle of its memory 10.

Fig. 3b shows an electronic device comprising an SSD/Flash memory 10 (MEM), a processor 40 (CPU) and an operating system 30 (OS). The operating system 40 of the device 200 includes software routines that are executed by the device's CPU 40 and implement the method of Fig. 1 in order to increase the lifecycle of the SSD/Flash memory 10.

The device 200 may be, preferably, a personal computer, a portable computer or tablet computer, a mobile telecommunication terminal, such as a mobile phone, or any other electronic device equipped with an SSD or Flash memory in order to conduct storage operations during its regular operation.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for wear levelling an SSD/Flash memory (10) comprising memory cells (1), each memory cell (1) being configured to have a data block (2) stored therein, the method comprising emptying memory cells (1) by moving data blocks (2) currently stored therein (M5), **characterized in that** a data block (2) is selected (M3, M4) to be moved based on the nature of the data block (2).

2. The method according to claim 1, **characterized in that** the data block (2) is selected (M3) to be moved only if a predetermined criterion is met (M2).

3. The method according to claim 1 or 2, **characterized in that** the data block (2) is selected (M3) if the data block (2) relates to static data.

4. The method according to any one of claims 1 to 3, **characterized in that** the data block (2) is selected (M3) if the data block (2) relates to executable code or program code or an operating system.

5. The method according to any one of claims 1 to 4, **characterized in that** the data block (2) is selected (M3) if the data block (2) relates to a JavaCard Executable Load File, ELF.

6. The method according to any one of claims 1 to 5, **characterized in that** the data block (2) is selected (M3) such that the memory cell (1) to be emptied is worn below average and/or such that the probability is reduced that the memory cell (1) to be emptied is worn above average.

7. The method according to any one of claims 1 to 6, **characterized in that** the data block (2) is moved (M5) into an empty memory cell (1) or is moved into a memory cell (1) that is emptied by moving (M5) the data block (2) currently stored **in that** memory cell (1).

8. The method according to any one of claims 1 to 7, **characterized in that** the data block (2) is selected to be moved in reaction to a request to write a new or updated data block (2), whereas the new or updated data block (2) is written into the emptied memory cell (1).

9. The method according to any one of claims 1 to 8, **characterized in that** a candidate list of such data blocks (2) is maintained which qualify for being moved based on their nature.

10. The method according to claim 9, **characterized in that** the data block (2) is randomly selected from the candidate list (M3).

11. The method according to claim 2, **characterized in that** the data block (2) is selected (M3) to be moved if a threshold of write operations is reached or based on a random process or periodically (M2).

12. An SSD/Flash memory unit (100) comprising a memory (10) having memory cells (1), each memory cell (1) being configured to have a data block (2) stored therein, **characterized by** a memory controller (20) configured to empty memory cells (1) by moving data blocks (2) currently stored therein, a data block (2) being selected to be moved based on the nature of the data block (2), whereas, preferably, the memory controller (20) is configured to select the data block (2) if the data block relates to static data and/or relates to executable code or program code and/or relates to an operating system and/or relates to a JavaCard Executable Load File, ELF.

13. The SSD/ Flash memory unit (100) according to claim 12, wherein the memory controller (20) is configured to execute a method according to any one of claims 1 to 11.

14. Electronic device (200) comprising an SSD/Flash memory (10) having memory cell (1), each memory cell (1) being configured to have a data block (2) stored therein, **characterized by** an operating system (30) configured to empty memory cells (1) by moving data blocks (2) currently stored therein, a data block (2) being selected to be moved based on the nature of the data block (2), whereas, preferably, the operating system (30) is configured to select the data block (20) if the data block (2) relates to static data and/or relates to executable code or program code and/or relates to the operating system and/or relates to a JavaCard Executable Load File, ELF.

15. The SSD/ Flash memory unit (10) according to claim 14, wherein the operating system (30) is configured to execute a method according to any one of claims 1 to 11.
